# EUROPÄISCHE PATENTSCHRIFT

(11) **EP 2 903 882 B1**
(45) Veröffentlichungstag und Bekanntmachung des Hinweises auf die Patenterteilung: **17.01.2018**
(21) Anmeldenummer: 13773683.1
(22) Anmeldetag: 01.10.2013
(51) Int. Cl.: B62D 7/15

(54) **SCHWERLASTFAHRZEUG MIT NORMALLENKUNG UND HUNDEGANGLENKUNG**
HEAVY ROAD VEHICLE WITH NORMAL STEERING AND CRAB STEERING
POIDS LOURD À DIRECTION NORMALE ET DIRECTION PARALLÈLE

(30) Priorität: 02.10.2012 DE 102012218045
(43) Veröffentlichungstag der Anmeldung: 12.08.2015
(73) Patentinhaber: Goldhofer AG, 87700 Memmingen (DE)
(72) Erfinder: MERKEL, Felix, 87700 Memmingen (DE); SCHOLL, Benjamin, 86923 Finning (DE)
(74) Vertreter: Weickmann & Weickmann PartmbB
(86) Internationale Anmeldenummer: PCT/EP2013/070435
(87) Internationale Veröffentlichungsnummer: WO 2014/053478

(56) Entgegenhaltungen:
- EP-A1- 1 577 159
- WO-A1-2009/053526
- US-A1- 2003 218 374
- US-A1- 2010 126 790

## Beschreibung

Die Erfindung betrifft ein Schwerlastfahrzeug nach dem Oberbegriff des Anspruchs 1.

Unter einem "Schwerlastfahrzeug" werden dabei im Zusammenhang mit der vorliegenden Erfindung sowohl selbstfahrende Schwerlastfahrzeuge als auch Schwerlastanhänger verstanden.

Schwerlastanhänger oder wie es im Anhang XI zur EG-Richtlinie 2007-46-EG in der Fassung vom 15.07.2011 heißt "Anhänger für Schwerlasttransporte" sind gemäß der dort gegebenen Definition dieses Begriffs Fahrzeuge der Klasse O₄ für den Transport von unteilbaren Ladungen (beispielsweise Rotorflügel von Windkraftanlagen), die aufgrund ihrer Abmessungen Geschwindigkeits- und Verkehrsbeschränkungen unterliegen. Eine analoge Definition trifft auch auf selbstfahrende Schwerlastfahrzeuge zu.

Der erfindungsgemäße Schwerlastanhänger kann sowohl ein Schwerlastanhänger mit Zuggabel als auch ein Schwerlastauflieger sein. Zudem kann der erfindungsgemäße Schwerlastanhänger modular aufgebaut sein, und zwar unabhängig von der Anzahl der Module.

Wird eines der Module eines solchen modularen Schwerlastanhängers mit einem sogenannten "Powerpack" ausgestattet, in dem ein Verbrennungsmotor mit einer Hydraulikpumpe angeordnet ist, die den hydraulischen Volumenstrom zum Antrieb der Hydraulikmotoren der Antriebsachsen der Module bereitstellt, so kann hierdurch aus einem nachlaufenden Modulfahrzeug ein selbstfahrendes Modulfahrzeug gebildet werden.

Ferner ist darauf hinzuweisen, dass im Zusammenhang mit der vorliegenden Erfindung eine "Achse" nicht eine reale, d.h. physisch vorhandene Achse zu sein braucht, wie etwa beim Beispiel der Starrachse, sondern auch eine virtuelle Achse bezeichnen kann, die dadurch gebildet wird, dass die linke Radbaugruppe und die rechte Radbaugruppe bezogen auf die Längsachse des Fahrzeugs im Wesentlichen auf der gleichen "Höhe" angeordnet sind (d.h. eine die Ebene, in der beide Lenkdrehachsen der linken und rechten Radbaugruppen verlaufen, verläuft orthogonal zur Längsachse des Fahrzeugs).

Wenn im Zusammenhang mit der vorliegenden Erfindung der Begriff "Radbaugruppe" verwendet wird, so wird hierunter das einer Seite des Fahrzeugs zugeordnete Rad bzw. die einer Seite des Fahrzeugs zugeordneten und gemeinsam gelenkten Räder der jeweils betrachteten Fahrzeugachse nebst ihrer jeweiligen Anbindung an den Fahrzeugrahmen verstanden. Dabei kann jedes Rad einfach bereift, zwillingsbereift oder gar mehrfach bereift sein.

Die Anforderungen an die Lenkung eines gattungsgemäßen Schwerlastfahrzeugs sind vielfältig. Zum einen muss das Fahrzeug straßentauglich sein und daher die einschlägigen gesetzlichen Vorschriften erfüllen, beispielsweise den europäischen Regelungen für Kraftfahrzeuge und ihre Anhänger (ECE-Regelungen) und der deutschen Straßenverkehrszulassungsordnung (StVZO) genügen. Dies wird mittels eines Normallenkbetriebs ermöglicht, der diese Voraussetzungen erfüllt und den Lenkwinkel der einzelnen Radbaugruppen beispielsweise nach dem Ackermann-Prinzip bestimmt. In der Reinform dieses Ackermann-Prinzips wird der Lenkwinkel jeder einzelnen Radbaugruppe derart eingestellt, dass sich die Verlängerungen der Radachsen aller Radbaugruppen im Idealfall im Wesentlichen in einem einzigen Punkt treffen, wobei der Abstand dieses Punkts von der Fahrzeuglängsachse den Radius der Kurve bestimmt, die das Fahrzeug gerade fährt. In der Praxis wird das Ackermann-Prinzip aber häufig dadurch angenähert, dass man die ein und derselben Achse zugehörigen Radbaugruppen auf den gleichen Lenkwinkel einstellt, wobei man die Lenkwinkel der verschiedenen Achsen nach dem Ackermann-Prinzip wählt.

Dieser Normallenkbetrieb ist jedoch für das Rangieren am Zielort häufig nicht geeignet. Daher benötigt das Fahrzeug ferner einen Hundeganglenkbetrieb, bei dem alle Radbaugruppen aller Achsen gemäß dem gleichen Lenkwinkel gelenkt werden, um Parallelverschiebungen des Fahrzeugs zu ermöglichen.

Die EP-A-1577159 offenbart ein gattungsbildendes Schwerlastfahrzeug entsprechend dem Oberbegriff des Anspruchs 1.

Ferner seien die Dokumente WO-A-2009/053526, US-A-2003/218374 und US-A-2010/126790 erwähnt.

Die bisher im Stand der Technik vorgeschlagenen Lösungen haben jedoch alle den Nachteil, dass sie entweder konstruktiv oder steuerungstechnisch zu aufwändig sind oder nicht den einschlägigen gesetzlichen Vorschriften genügen. Beispielsweise können die Verbindungselemente zur Weiterleitung der Lenkkräfte von Achse zu Achse mittels Stellaggregaten längenveränderlich ausgebildet sein, wobei eine Steuervorrichtung die Länge der einzelnen Verbindungselemente derart beeinflusst, dass sich der jeweils gewünschte Lenkbetrieb ergibt.

Es ist daher Aufgabe der Erfindung, das gattungsgemäße Schwerlastfahrzeug derart weiterzubilden, dass es den Normallenkbetrieb und den Hundeganglenkbetrieb in konstruktiv einfacher Weise bereitstellt und die Lenkung zudem den Anforderungen der einschlägigen gesetzlichen Vorschriften genügt.

Diese Aufgabe wird erfindungsgemäß gelöst durch ein Schwerlastfahrzeug nach Anspruch 1.

Erfindungsgemäß verfügt die Lenkanlage des Schwerlastfahrzeugs somit über zwei gesonderte Lenkeinrichtungen, nämlich eine Normallenkbetrieb-Lenkeinrichtung und eine Hundeganglenkbetrieb-Lenkeinrichtung, wobei bei beiden Lenkeinrichtungen die Lenkkraft über die Verbindungselemente rein mechanisch von Achse zu Achse weitergeleitet wird. Die Verbindungselemente der Normallenkbetrieb-Lenkeinrichtung oder/und der Hundeganglenkbetrieb-Lenkeinrichtung sind erfindungsgemäß bevorzugt betriebsstarr ausgebildet. D.h. ihre Länge verändert sich während des Lenkbetriebs nicht. Dies schließt aber nicht aus, dass die Länge der Verbindungselemente zur Festlegung eines gewünschten Lenkverhaltens erforderlichenfalls vor Aufnahme des Lenkbetriebs verändert werden kann.

Mittels der wenigstens einen Kupplungseinrichtung kann zwischen dem Normallenkbetrieb und dem Hundeganglenkbetrieb hin und her geschaltet werden. Dies vereinfacht nicht nur den Aufbau der Lenkanlage und damit auch die Ansteuerung beider Lenkbetriebsarten, sondern genügt zudem auch den Anforderungen der einschlägigen gesetzlichen Vorschriften.

Obgleich grundsätzlich auch Konstruktionen denkbar sind, die auf dem Einsatz von in Längsrichtung des Schwerlastfahrzeugs verlagerbaren Zahnstangen beruhen, deren Verlagerungsbewegung von Zahnritzeln bzw. Zahnritzelanordnungen abgegriffen und auf das Lenk-Drehelement übertragen werden, wobei die Zahnstangen die Funktion der Verbindungselemente übernehmen und die Zahnritzel bzw. Zahnritzelanordnungen die Funktion der Lenkkrafteinleitungseinheiten, wird erfindungsgemäß vorgeschlagen, dass die Normallenkbetrieb-Lenkkrafteinleitungseinheit ein dem jeweiligen Lenk-Drehelement zugeordnetes Normallenkbetrieb-Drehelement umfasst, dass die Hundeganglenkbetrieb-Lenkkrafteinleitungseinheit ein dem jeweiligen Lenk-Drehelement zugeordnetes Hundeganglenkbetrieb-Drehelement umfasst, und dass die Kupplungseinrichtung das Lenk-Drehelement wahlweise mit dem Normallenkbetrieb-Drehelement oder dem Hundeganglenkbetrieb-Drehelement drehfest verbindet. Diese Konstruktion hat im Vergleich mit der auf Zahnstangen basierenden Konstruktion den Vorteil einfacheren Aufbaus und damit kostengünstigerer Herstellung sowie einer geringeren Anfälligkeit gegenüber Verschmutzung.

Vorzugsweise sind sowohl das Normallenkbetrieb-Drehelement als auch das Hundeganglenkbetrieb-Drehelement derart angeordnet, dass sie um die Drehachse des Lenk-Drehelements drehbar sind.

Wie dies für die Normallenkbetrieb-Lenkeinrichtung von Modulfahrzeugen der Anmelderin an sich bekannt ist, können die für die gelenkten Achsen gewünschten Lenkwinkel, genauer gesagt deren Lenkwinkelverhältnis, d.h. das Verhältnis des Lenkwinkels zu einer Ausgangsstellgröße des Kraftgeräts, dadurch vorgegeben werden, dass man die freien Enden der Verbindungselemente in einem vorgegebenen radialen Abstand von der Drehachse des zugeordneten Lenk-Drehelements an dem jeweiligen Normallenkbetrieb-Drehelement anlenkt. Das gleiche Konstruktionsprinzip kann vorteilhafterweise auch bei der Hundeganglenkbetrieb-Lenkeinrichtung des erfindungsgemäßen Schwerlastfahrzeugs angewendet werden, d.h. man lenkt die freien Enden der Hundeganglenkbetrieb-Verbindungselemente alle in dem gleichen radialen Abstand von der Drehachse des zugeordneten Lenk-Drehelements an dem jeweiligen Hundeganglenkbetrieb-Drehelement an, um für alle eine 1:1-Lenkwinkelübersetzung zu erzielen.

Die erfindungsgemäße Lenkanlage kann sowohl bei Fahrzeugen zum Einsatz kommen, bei deren Normallenkbetrieb-Lenkeinrichtung für beide ein und derselben Achse angehörenden Radbaugruppen ein gemeinsames Lenk-Drehelement vorgesehen ist (derartige Lenkanlagen kommen beispielsweise bei den Schwerlastanhängern und Schwerlastaufliegern der Anmelderin zum Einsatz; siehe bspw. DE 10 2012 205 641), als auch bei Fahrzeugen zum Einsatz kommen, bei denen jeder Radbaugruppe ein gesondertes Lenk-Drehelement zugeordnet ist (derartige Lenkanlagen kommen beispielsweise bei den Modulfahrzeugen der Anmelderin zum Einsatz).

Ist das wenigstens eine Lenk-Drehelement, wie dies an sich von den Lenk-Drehelementen der Modulfahrzeuge der Anmelderin bekannt ist, Teil eines Drehgestells, welches ferner ein Rahmenelement umfasst, das am Rahmen des Fahrzeugs betriebsfest angeordnet ist, wobei das Lenk-Drehelement an dem Rahmenelement um seine Drehachse verdrehbar gelagert ist, so kann dieses Drehgestell zur Verwirklichung der vorliegenden Erfindung dahingehend modifiziert werden, dass es ferner das Normallenkbetrieb-Drehelement und das Hundeganglenkbetrieb-Drehelement umfasst, wobei das Normallenkbetrieb-Drehelement und das Hundeganglenkbetrieb-Drehelement an dem Rahmenelement mittelbar oder unmittelbar um die Drehachse verdrehbar gelagert sind, beispielsweise mittels Kugellagern. Dabei kann das Rahmenelement vorzugsweise ringförmig ausgebildet und mit dem Fahrzeugrahmen beispielsweise durch Verschrauben verbunden sein. Ferner können auch das Normallenkbetrieb-Drehelement und das Hundeganglenkbetrieb-Drehelement ringförmig ausgebildet sein und mit dem Lenk-Drehelement und dem Rahmenelement einen Mehrfach-Drehkranz, vorzugsweise einen Mehrfach-Kugeldrehkranz bilden.

Zur Ermöglichung der Weiterleitung der Lenkkraft von Radbaugruppe zu Radbaugruppe wird vorgeschlagen, dass die wenigstens eine Normallenkbetrieb-Lenkkrafteinleitungseinheit einen Normallenkbetrieb-Lenkhebel aufweist, mit welchem das wenigstens eine Normallenkbetrieb-Verbindungselement verbunden ist, oder/und dass die wenigstens eine Hundeganglenkbetrieb-Lenkkrafteinleitungseinheit einen Hundeganglenkbetrieb-Lenkhebel aufweist, mit welchem das wenigstens eine Hundeganglenkbetrieb-Verbindungselement verbunden ist. Um die Normallenkbetrieb-Lenkeinrichtung und die Hundeganglenkbetrieb-Lenkeinrichtung vor äußeren Einflüssen, insbesondere vor Beschädigungen durch äußere Einflüsse, schützen zu können, ist dabei es vorteilhaft, wenn der Normallenkbetrieb-Lenkhebel und der Hundeganglenkbetrieb-Lenkhebel bei Geradeausfahrt auf der zur Fahrzeuglängsmitte hin weisenden Seite des Lenk-Drehelements angeordnet sind.

Gemäß der vorstehend bereits angesprochenen "Zahnstangen-Alternative" könnte die wenigstens eine Normallenkbetrieb-Lenkkrafteinleitungseinheit oder/und die wenigstens eine Hundeganglenkbetrieb-Lenkkrafteinleitungseinheit aber auch mit einem Zahnkranz ausgebildet sein, der mit wenigstens einem als Zahnstange ausgebildeten Verbindungselement in Eingriff steht.

In Weiterbildung der Erfindung wird vorgeschlagen, dass die Kupplungseinrichtung ein Stellaggregat umfasst, das mit dem Lenk-Drehelement fest verbunden ist, sowie einen Schieber, der mittels des Stellaggregats relativ zu dem Lenk-Drehelement zwischen einer ersten Stellung und einer zweiten Stellung verlagerbar ist, wobei der Schieber einen ersten Eingriffsabschnitt und einen zweiten Eingriffsabschnitt umfasst, wobei der erste Eingriffsabschnitt in der ersten Stellung des Schiebers mit einer der Lenkkrafteinleitungseinheiten, nämlich der Normallenkbetrieb-Lenkkrafteinleitungseinheit oder der Hundeganglenkbetrieb-Lenkkrafteinleitungseinheit, in Lenkkraftübertragungseingriff steht, während der zweite Eingriffsabschnitt in der zweiten Stellung des Schiebers mit der jeweils anderen der Lenkkrafteinleitungseinheiten, nämlich der Hundeganglenkbetrieb-Lenkkrafteinleitungseinheit oder der Normallenkbetrieb-Lenkkrafteinleitungseinheit, in Lenkkraftübertragungseingriff steht. Dabei kann die Kupplungseinrichtung als vormontierte Baugruppe ausgebildet sein und hierzu beispielsweise ein Basiselement umfassen, das mit dem Lenk-Drehelement betriebsfest verbindbar ist. Ferner kann das Stellaggregat auf dem Basiselement fest angeordnet und/oder der Schieber an dem Basiselement verschiebbar geführt sein. Darüber hinaus kann das Stellaggregat ein doppeltwirkendes Zylinder-Kolben-Aggregat sein oder/und kann das Erreichen der ersten und zweiten Stellungen mittels Näherungsschaltern erfasst werden.

Ist das wenigstens eine Lenk-Drehelement, wie vorstehend beschrieben, Teil eines Drehgestells und im Wesentlichen ringförmig ausgebildet, so kann die Kupplungseinrichtung innerhalb des Lenk-Drehelementrings angeordnet sein. Hier ist sie vor äußeren Einflüssen geschützt, so das insbesondere Beschädigungen durch äußere Einflüsse vorgebeugt werden kann. Ferner kann die Kupplungseinrichtung in axialer Richtung oder/und in radialer Richtung wirken. Zudem ist es denkbar, dass die Kupplungseinrichtung zwei voneinander getrennt ausgebildete, aber bezüglich ihres Betriebs synchronisierte Kupplungseinheiten umfasst, von denen die eine der Normallenkbetrieb-Lenkkrafteinleitungseinheit und die andere der Hundeganglenkbetrieb-Lenkkrafteinleitungseinheit zugeordnet ist.

Um die freie Bewegung der beiden Lenkkrafteinleitungseinheiten relativ zueinander ermöglichen zu können, kann ferner vorgesehen sein, dass der Schieber dem einen der beiden Eingriffsabschnitte benachbart eine Ausnehmung aufweist, die dann, wenn dieser Eingriffsabschnitt mit der zugeordneten Lenkkrafteinleitungseinheit in Lenkkraftübertragungseingriff steht, die freie Bewegung der anderen Lenkkrafteinleitungseinheit ermöglicht.

Unabhängig vom Vorsehen dieser Ausnehmung kann der wechselweise Eingriff der Eingriffsabschnitte mit den beiden Lenkkrafteinleitungseinheiten in fertigungstechnisch einfacher Weise realisiert werden, wenn der erste Eingriffsabschnitt und der zweite Eingriffsabschnitt in Höhenrichtung des Fahrzeugs übereinander angeordnet sind.

Ist die Kupplungseinrichtung innerhalb des ringförmig ausgebildeten Lenk-Drehelements angeordnet und sind die beiden ebenfalls ringförmig ausgebildeten Lenkkrafteinleitungseinheiten koaxial zum Lenk-Drehelement angeordnet, so kann die Ausnehmung des Schiebers die freie Drehung der radial inneren Lenkkrafteinleitungseinheit ermöglichen, wenn der Schieber mit der radial äußeren Lenkkrafteinleitungseinheit in Lenkkraftübertragungseingriff steht.

Um die jeweilige Lenkkrafteinleitungseinheit relativ zum Schieber zentrieren zu können, wird vorgeschlagen, dass wenigstens einer der Eingriffsabschnitte mit Schrägflächen ausgebildet ist, die mit korrespondierenden Gegenschrägflächen der zugeordneten Lenkkrafteinleitungseinheit zusammenwirken. Der Lenkkraftübertragungseingriff zwischen dem jeweils betrachteten Eingriffsabschnitt und der zugeordneten Lenkkrafteinleitungseinheit ist somit im Wesentlichen spielfrei.

Um lediglich den Lenk-Drehelementen jeweils eine Kupplungseinrichtung zuordnen zu müssen, ist es vorteilhaft, wenn für den Normallenkbetrieb und den Hundeganglenkbetrieb jeweils wenigstens ein Kraftgerät zur Erzeugung der erforderlichen Lenkkraft vorgesehen ist.

Grundsätzlich ist es denkbar, die für den Hundeganglenkbetrieb erforderliche Lenkkraft mittels eines einzigen Kraftgeräts zu erzeugen. Dieses müsste jedoch entsprechend groß bemessen sein, um die erforderliche Leistung bereitstellen zu können. Da es ohnehin nicht ganz einfach ist, den für die zusätzliche Hundeganglenkeinrichtung erforderlichen Bauraum bereitzustellen, und es einfacher ist, mehrere kleinere Kraftgerät unterzubringen als ein großes, wird in Weiterbildung vorgeschlagen, dass den linken Radbaugruppen des Fahrzeugs und den rechten Radbaugruppen des Fahrzeugs jeweils ein gesondertes Kraftgerät zur Erzeugung der für den Hundeganglenkbetrieb erforderlichen Lenkkraft zugeordnet ist. Diese Ausführungsvariante empfiehlt sich auch unabhängig von der Bauraumproblematik für Fahrzeuge, bei denen jeder Radbaugruppe ein gesondertes Lenk-Drehelement zugeordnet ist, beispielsweise den Modulfahrzeugen der Anmelderin. Zudem hat es sich gezeigt, dass die für die praktische Realisierung der erfindungsgemäßen Lenkanlage geeigneten Kraftgeräte eine Leistung bereitzustellen in der Lage sind, die für eine vorbestimmte Maximalzahl, von beispielsweise vier, Radbaugruppen ausreicht. Auch aus diesem Grund ist es vorteilhaft, eine Mehrzahl von Kraftgeräten zur Erzeugung der für den Hundeganglenkbetrieb erforderlichen Lenkkraft vorzusehen. Die Synchronisierung der Mehrzahl von Kraftgeräten kann manuell oder mechanisch oder elektronisch oder hydraulisch zwangsgesteuert erfolgen.

Das Kraftgerät kann beispielsweise ein, vorzugsweise hydraulisch betätigbares, Zylinder-Kolben-Aggregat sein. Die hydraulische Betätigbarkeit ist insbesondere bei den mit einem "Powerpack" (wie vorstehend beschrieben) ausgestatteten Fahrzeugen vorteilhaft, da der für die Betätigung des Zylinder-Kolben-Aggregats erforderliche hydraulische Volumenstrom durch das "Powerpack" ohnehin bereitgestellt wird.

Um das Zylinder-Kolben-Aggregat auch im ausgefahrenen Zustand der Kolbenstange vor Einknicken schützen zu können, wird vorgeschlagen, dass der Zylinder seinem Kolbenstangen-Austrittsende benachbart am Rahmen des Fahrzeugs gelagert ist. Hierdurch kann die Knicklänge des Zylinder-Kolben-Aggregats verkürzt werden, und die auf die Kolbenstangendichtung einwirkenden Kräfte können gering gehalten werden.

Um die auf die Kolbenstangendichtung einwirkenden Kräfte gering halten zu können, kann zusätzlich oder alternativ das freie Ende der Kolbenstange mit einem Führungsschlitten verbunden sein, der in einer rahmenfesten Führung verschiebbar geführt ist, wobei der Führungsschlitten vorzugsweise ferner mit einem Ende einer Verbindungsstange verbunden ist, deren anderes Ende mit der Lenkkrafteinleitungseinheit verbunden ist. Zur Reduzierung der von seiner Bewegung in der Führung ausgehenden Reibung kann der Führungsschlitten ferner mit einem Kunststoffgleitbelag ausgebildet sein. Als Kunststoffmaterial eignet sich beispielsweise der unter der Handelsbezeichnung MURLUBRIC® von der Firma Murtfeld Kunststoffe GmbH & Co. KG, Dortmund vertriebene Gleitlagerkunststoff. Um Verschleiß am Führungsschlitten ausgleichen zu können, wird ferner vorgeschlagen, dass der Zylinder des Zylinder-Kolben-Aggregats am Rahmen des Fahrzeugs relativ zu diesem verschwenkbar gelagert ist.

Um für einen zufriedenstellenden Rangierbetrieb sorgen zu können, ist es ausreichend, wenn die Radbaugruppen im Hundeganglenkbetrieb über einen Lenkwinkelbereich von 0° (Geradeausfahrt) bis 90° (seitliches Verschieben) gelenkt werden können. Zur Ermöglichung einfacher Korrekturbewegungen ist es dabei vorteilhaft, diesen Lenkwinkelbereich an der Obergrenze von 90° oder/und der Untergrenze von 0° um einen Zusatzlenkwinkelbereich von 5° bis 10° zu erweitern, so dass der erzielte Gesamtlenkwinkelbereich sich zwischen -5° bis +95° und -10° bis +100° erstrecken kann.

Grundsätzlich ist es jedoch auch denkbar, dass sich der Lenkwinkelbereich für den Hundeganglenkbetrieb zwischen -90° und +90° oder sogar zwischen -180° und +180° erstreckt. Um dies zu ermöglichen, kann das Kraftgerät zur Erzeugung der Hundeganglenkbetrieb-Lenkkraft ein hydraulischer Spindeltrieb sein, der mit einem Zahnkranz der Lenkkrafteinleitungseinheit kämmt, und kann das wenigstens eine Verbindungselement von einem flexiblen aber längenunveränderbaren Element gebildet sein, beispielsweise einer Kette oder einem Seil, insbesondere einem Stahlseil. Auch bei dieser Ausführungvariante kann der Lenkwinkelbereich durch einen Zusatzlenkwinkelbereich vergrößert werden.

Die Erfindung wird im Folgenden anhand der beigefügten Zeichnung an Ausführungsbeispielen näher erläutert werden. Es stellt dar:
- Figur 1: eine perspektivische Ansicht der Lenkanlage eines erfindungsgemäßen Fahrzeugs, wobei das Fahrzeug zur Erleichterung des Blicks auf die Lenkanlage ohne Fahrzeugrahmen und dergleichen weitere Aufbauten dargestellt ist;
- Figur 2: eine Draufsicht auf die Lenkanlage gemäß Figur 1;
- Figur 3: eine Frontansicht auf die Lenkanlage gemäß Figur 1;
- Figur 4: eine perspektivische Ansicht einer einzelnen Radbaugruppe des erfindungsgemäßen Fahrzeugs;
- Figur 5: einen Schnitt des Mehrfach-Kugeldrehkranzes der Radbaugruppe der Figur 4;
- Figur 6: eine perspektivische Druntersicht des Mehrfach-Kugeldrehkranzes der Figur 5;
- Figur 7: eine perspektivische Ansicht einer Kupplungseinrichtung der Radbaugruppe der Figur 4;
- Figuren 8 bis 10: Draufsichten auf das Kraftgerät zur Erzeugung der für die Hundeganglenkung erforderlichen Lenkkraft und den nachgeordneten Mechanismus zur Übertragung derselben auf die Hundegang-Lenkkrafteinleitungseinheit, und zwar für drei verschiedene Lenkstellungen, nämlich Figur 8 bei Geradeausfahrt, Figur 9 bei 45° Lenkeinschlag und Figur 10 bei 90° Lenkeinschlag;
- Figuren 11 bis 13: perspektivische Ansichten ähnlich Figur 1 - allerdings nur der Hundeganglenkeinrichtung - in drei unterschiedlichen Lenkstellungen, nämlich Figur 11 bei Geradeausfahrt, Figur 12 bei 45° Lenkeinschlag und Figur 13 bei 90° Lenkeinschlag;
- Figur 14: eine perspektivische Ansicht ähnlich Figur 1 in einer Kurvenfahrt-Lenkstellung während des Normallenkbetriebs;
- Figur 15: eine grob schematische Darstellung einer zweiten Ausführungsform einer erfindungsgemäßen Lenkanlage;
- Figur 16: eine grob schematische Darstellung einer dritten Ausführungsform einer erfindungsgemäßen Lenkanlage; und
- Figuren 17a bis: 17c grob schematische Darstellungen einer vierten Ausführungsform einer erfindungsgemäßen Lenkanlage.

Nachstehend werden der Aufbau und die Funktion des erfindungsgemäßen Schwerlastfahrzeugs am Beispiel eines Moduls für ein selbstfahrendes oder nachlaufendes Modulfahrzeug erläutert.

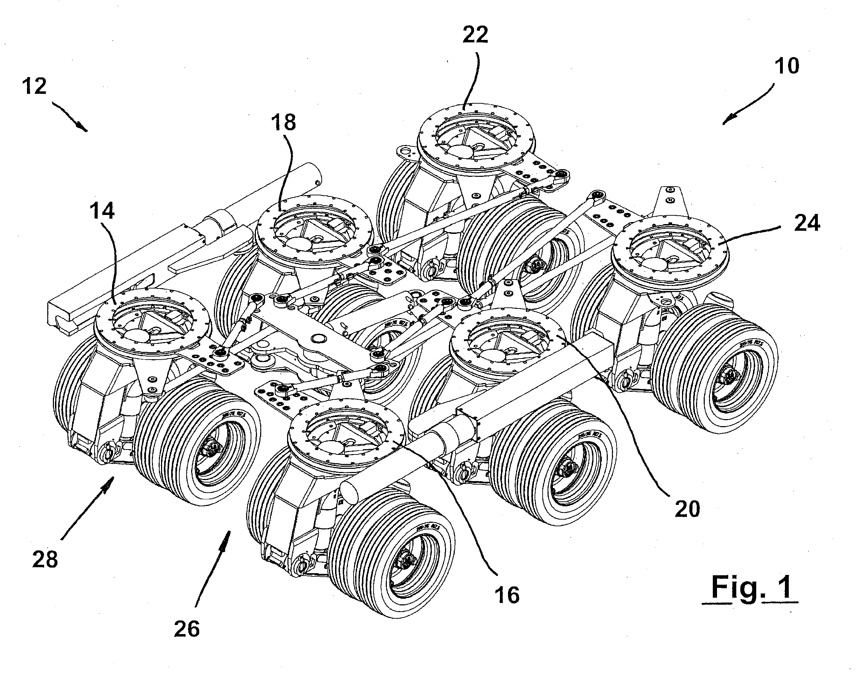

In den Figuren 1 bis 3 ist eine erste Ausführungsform eines erfindungsgemäßen Schwerlastfahrzeugs 10 dargestellt. Der besseren Übersicht halber sind lediglich die Lenkanlage 12 und die Radbaugruppen 14, 16, 18, 20, 22 und 24 gezeigt, während der Rahmen und weitere an diesem angeordnete Aufbauten des Fahrzeugs 10 nicht dargestellt sind. Die Radbaugruppen 14, 18, 22 sind dabei bezogen auf die Vorwärtsfahrtrichtung F des Fahrzeugs 10 rechte Radbaugruppen, während die Radbaugruppen 16, 20, 24 linke Radbaugruppen sind. Die Radbaugruppen 14 und 16 gehören einer vorderen Achse, die Radbaugruppen 18 und 20 einer mittleren Achse und die Radbaugruppen 22 und 24 einer hinteren Achse des Fahrzeugs 10 an.

Die Lenkanlage 12 umfasst eine Normallenkbetrieb-Lenkeinrichtung 26, die für Fahrten des Fahrzeugs 10 im öffentlichen Straßennetz ausgelegt und bestimmt ist, und eine Hundeganglenkbetrieb-Lenkeinrichtung 28, die für das Rangieren des Fahrzeugs 10 ausgelegt und bestimmt ist.

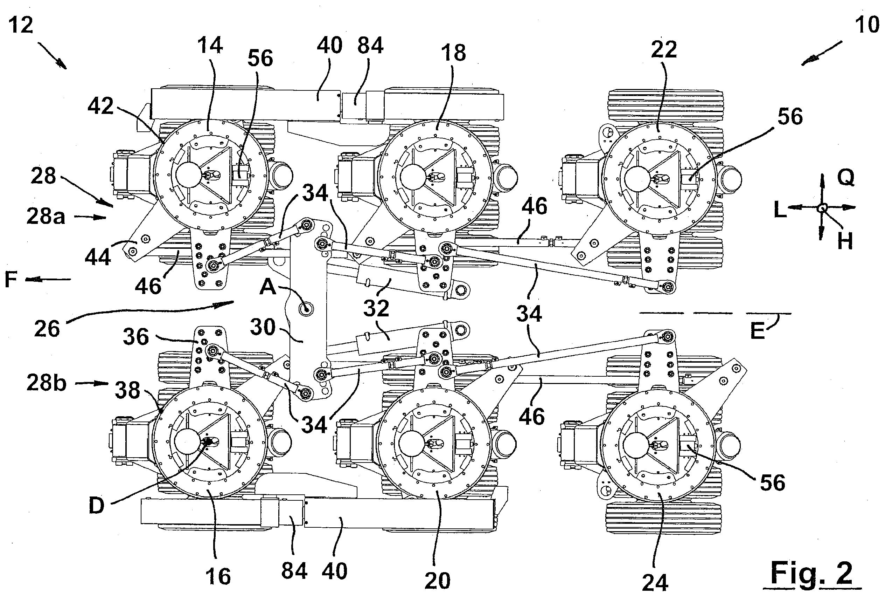

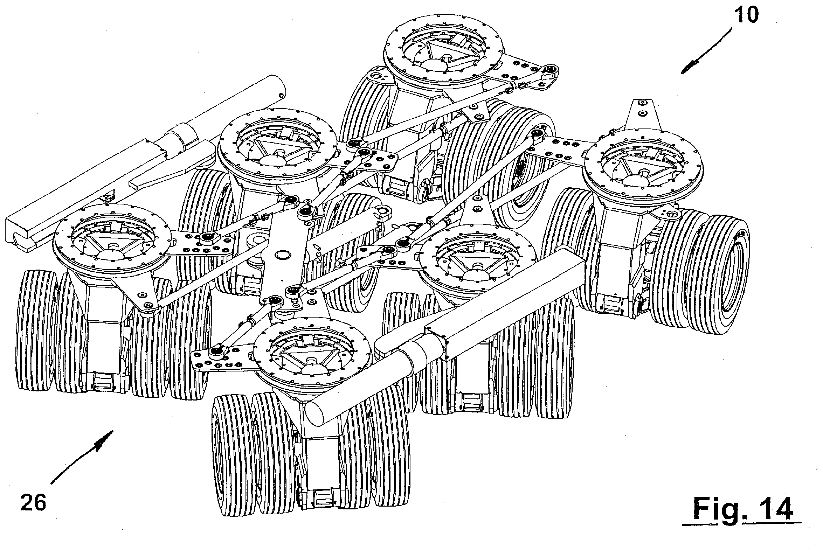

Die Normallenkbetrieb-Lenkeinrichtung 26 umfasst eine Umlenkplatteneinheit 30, welche mittels zweier Kraftgeräte 32, welche beispielsweise von zwei hydraulisch betätigbaren Zylinder-Kolben-Aggregaten gebildet sind, um eine zur Hochachse H des Fahrzeugs 10 im Wesentlichen parallel verlaufende Achse A verschwenkt werden kann. An der Umlenkplatteneinheit 30 sind Verbindungsstangen 34 angelenkt, die mit ihrem anderen Ende an Lenkhebeln 36 von Lenkkrafteinleitungseinheiten 38 der Radbaugruppen 14, 16, 18, 20 angelenkt sind. Eine weitere Verbindungsstange 34 verbindet die Lenkhebel 36 der Lenkkrafteinleitungseinheiten 38 der Radbaugruppen 18 und 22 bzw. 20 und 24. Wie man insbesondere in Figur 2 erkennt, weisen die Anlenkungspunkte der Enden der Verbindungsstangen 34 an den Lenkhebeln 36 von der jeweiligen Lenk-Drehachse D der zugehörigen Radbaugruppen unterschiedliche Abstände auf. Hierdurch kann für jede Radbaugruppe ein vorbestimmtes Lenkverhalten in Abhängigkeit des Lenkeinschlags der Umlenkplatteneinheit 30 festgelegt werden. Durch geeignete Wahl der Abstände kann dieses Lenkverhalten derart gewählt werden, dass das Fahrzeug 10 insgesamt ein dem Ackermann-Prinzip folgendes Lenkverhalten zeigt (siehe Figur 14).

Gemäß der in den Figuren 1 bis 3 dargestellten Ausführungsvariante kann die Hundeganglenkbetrieb-Lenkeinrichtung 28 geteilt ausgebildet sein, d.h. für die rechten Radbaugruppen 14, 18, 22 und die linken Radbaugruppen 16, 20, 24 ist jeweils eine gesonderte Hundeganglenkbetrieb-Lenkeinrichtung 28a bzw. 28b vorgesehen. Beide sind bis auf die Tatsache, dass die eine in Fahrtrichtung F angeordnet ist, während die andere entgegen der Fahrtrichtung F angeordnet ist, identisch ausgebildet. Daher wird im Folgenden lediglich der Aufbau und die Funktion der Hundeganglenkbetrieb-Lenkeinrichtung 28a für die rechten Radbaugruppen 14, 18, 22 beschrieben werden:

Die Hundeganglenkbetrieb-Lenkeinrichtung 28a umfasst eine Krafterzeugungsvorrichtung 40, die auf der Außenseite des Fahrzeugs 10 angeordnet und mit der Hundeganglenkbetrieb-Lenkkrafteinleitungseinheit 42 der Radbaugruppe 14 in Lenkkraftübertragungseingriff steht. Der genaue Aufbau der Krafterzeugungsvorrichtung 40 und die konstruktive Realisierung des Lenkkraftübertragungseingriffs wird nachstehend noch näher beschrieben werden. Die Lenkkrafteinleitungseinheiten 42 verfügen ferner über Lenkhebel 44, die mittels Verbindungsstangen 46 miteinander verbunden sind. Wie man in Figur 2 erkennt, sind die beiden Enden ein und derselben Verbindungsstange 46 an den Lenkhebeln 44 im gleichen Abstand von der Lenk-Drehachse der jeweiligen Radbaugruppen 14 und 18 bzw. 18 und 22 angelenkt. Hieraus resultiert eine 1:1-Übertragung der Lenkwinkel von Radbaugruppe zu Radbaugruppe, so dass alle Radbaugruppen stets den gleichen Lenkwinkel aufweisen. Die Synchronisierung der rechten Radbaugruppen 14, 18, 22 mit den linken Radbaugruppen 16, 20, 24 erfolgt dabei vorzugsweise steuerungstechnisch.

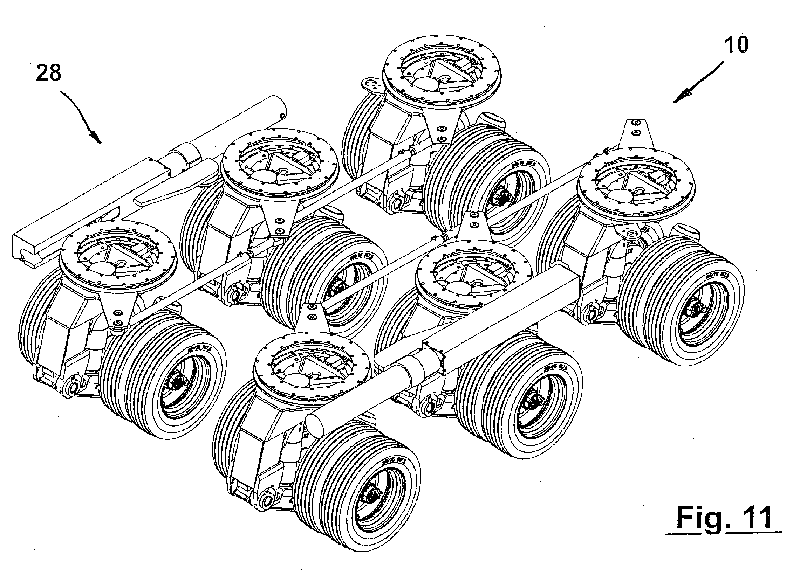

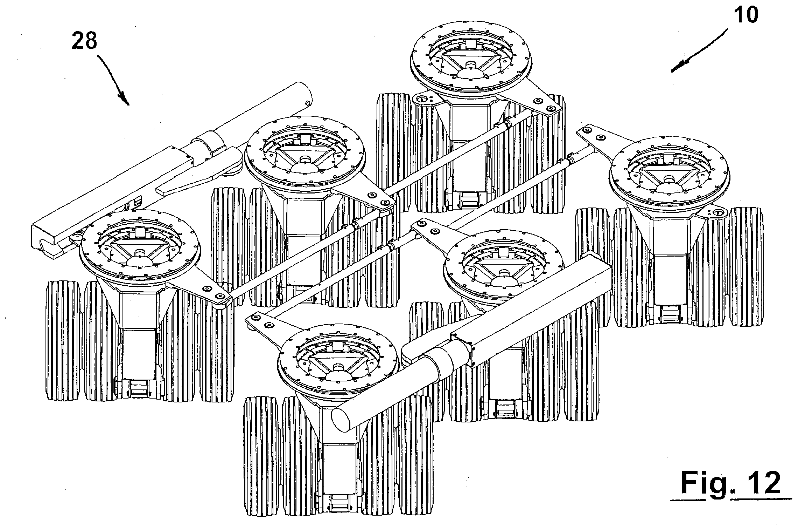

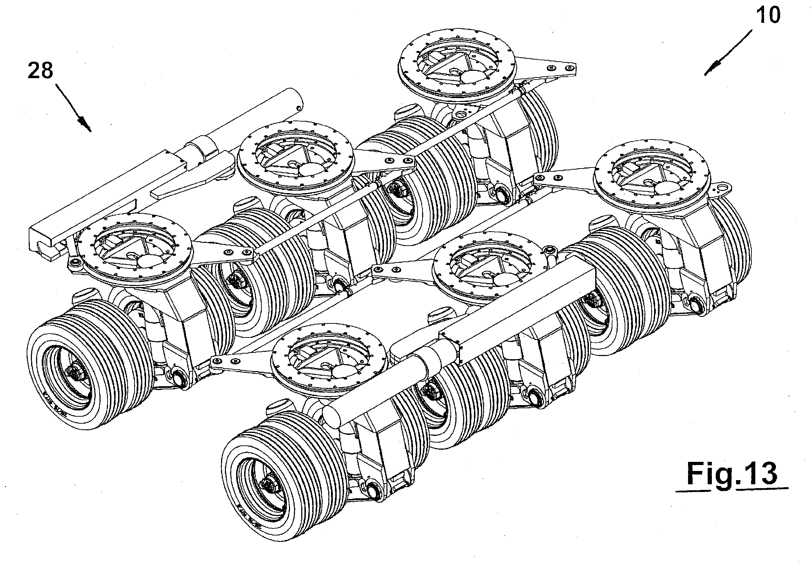

In Figur 11 ist die Hundeganglenkbetrieb-Lenkeinrichtung 28 so eingestellt, dass das Fahrzeug 10 geradeaus fährt, d.h. alle Radbaugruppen 14, 16, 18, 20, 22, 24 weisen den Lenkwinkel 0° auf. In Figur 12 weisen alle Radbaugruppen einen Lenkwinkel von 45° auf, so dass das Fahrzeug 10 schräg nach vorne bzw. hinten fährt. Und in Figur 13 sind alle Radbaugruppen auf einen Lenkwinkel von 90° eingestellt, so dass das Fahrzeug 10 seitlich verschoben werden kann.

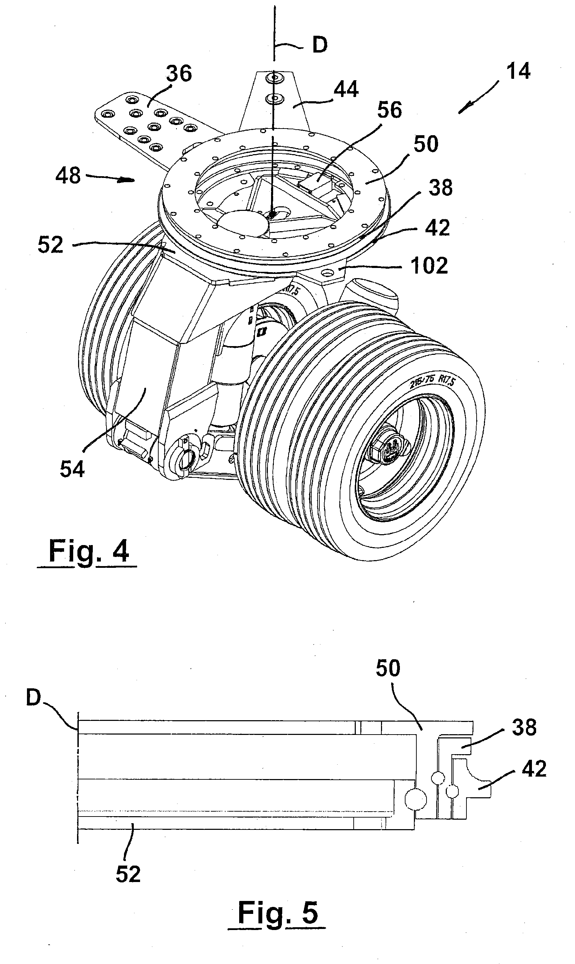

Wie im Folgenden mit Bezug auf Figur 4 erläutert werden wird, die exemplarisch die Radbaugruppe 14 zeigt, unterscheiden sich die Radbaugruppen 14, 16, 18, 20, 22, 24 von den Radbaugruppen, die bei den herkömmlichen Modulfahrzeugen der Anmelderin eingesetzt werden, lediglich hinsichtlich des Aufbaus des Drehkranzes 48.

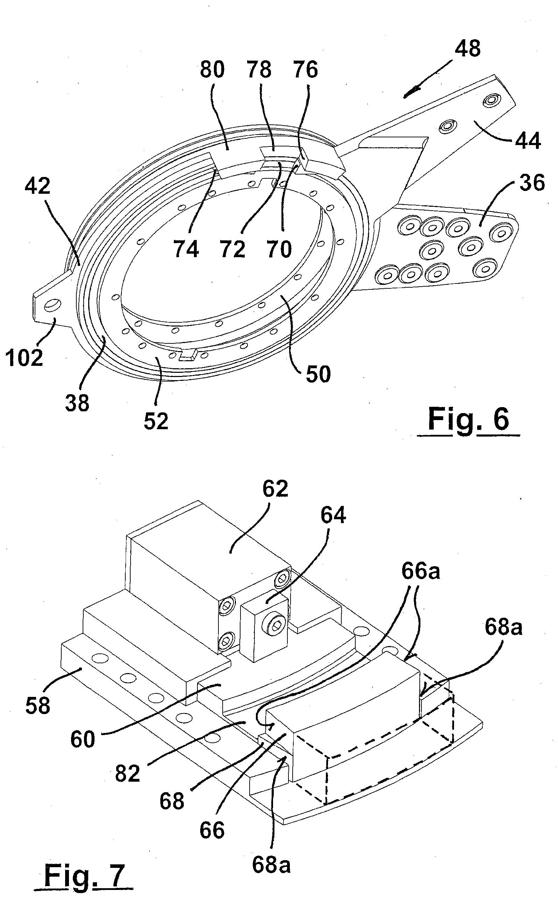

Insbesondere ist der nochmals in Figur 5 im Schnitt und in Figur 6 perspektivisch dargestellte Drehkranz 48 vorzugsweise als Mehrfach-Kugeldrehkranz ausgebildet. Er umfasst einen Rahmenring 50, der am (nicht dargestellten) Rahmen des Fahrzeugs 10 befestigt ist, beispielsweise durch Verschrauben, Vernieten oder dergleichen. Auf der Innenseite des Rahmenrings 50 ist über ein schematisch angedeutetes Kugellager das Lenk-Drehelement 52 um die Drehachse D des Drehkranzes 48 verdrehbar gelagert, an welchem der eigentliche Radträger 54 befestigt ist. Dieser ist identisch aufgebaut wie bei den herkömmlichen Radbaugruppen der Modulfahrzeuge der Anmelderin und wird daher hier nicht näher beschrieben werden. Auf der Außenseite des Rahmenrings 50 ist über ein schematisch angedeutetes Kugellager die ebenfalls ringförmig ausgebildete Lenkkrafteinleitungseinheit 38 für den Normallenkbetrieb und über ein weiteres ebenfalls lediglich schematisch angedeutetes Kugellager die ebenfalls ringförmig ausgebildete Lenkkrafteinleitungseinheit 42 für den Hundeganglenkbetrieb um die Drehachse D verdrehbar gelagert.

Um zwischen dem Normallenkbetrieb und dem Hundeganglenkbetrieb hin und her schalten zu können, ist eine Kupplungseinrichtung 56 vorgesehen, die das Lenk-Drehelement 52 wahlweise mit der Normallenkbetrieb-Lenkkrafteinleitungseinheit 38 oder der Hundeganglenkbetrieb-Lenkkrafteinleitungseinheit 42 verbindet.

In Figur 7 ist der Aufbau der Kupplungseinrichtung 56 genauer dargstellt. Sie umfasst eine Basisplatte 58, die beispielsweise mit dem Lenk-Drehelement 52 fest verbunden ist, insbesondere fest verschraubt ist. An der Basisplatte 58 ist ein Schieber 60 zwischen einer ersten Stellung (in Figur 7 durchgezogen dargestellt) und einer zweiten Stellung (in Figur 7 gestrichelt angedeutet) verschiebbar gelagert. Auf der Basisplatte 58 ist ferner ein Stellaggregat 62 befestigt, dessen Stellelement mit einer Lasche 64 des Schiebers 60 verbunden ist, um diesen zwischen der ersten und der zweiten Stellung zu verlagern. Das Stellaggregat 62 kann beispielsweise ein doppelt wirkender hydraulisches Zylinder-Kolben-Aggregat sein, dessen den ersten und zweiten Stellungen des Schiebers 60 entsprechende Endstellungen mittels Näherungsschaltern erfasst werden können. Die entsprechenden Erfassungssignale können an eine (nicht dargestellte) zentrale Lenksteuerungseinheit übermittelt werden, die ihrerseits das Stellaggregat 62 ansteuert.

Der Schieber 60 ist mit zwei in Höhenrichtung H des Fahrzeugs 10 übereinander angeordneten Eingriffsabschnitten 66 und 68 ausgebildet. Dabei ist der Eingriffsabschnitt 66 zum Eingriff mit den seitlichen Begrenzungsflächen 70 einer Ausnehmung 72 einer Eingriffslasche 74 (siehe Figur 6) der Lenkkrafteinleitungseinheit 38 für den Normallenkbetrieb bestimmt, während der Eingriffsabschnitt 68 zum Eingriff mit den seitlichen Begrenzungsflächen 76 einer Ausnehmung 78 einer Eingriffslasche 80 (siehe Figur 6) der Lenkkrafteinleitungseinheit 38 für den Hundeganglenkbetrieb bestimmt ist. Befindet sich der Schieber 60 in seiner ersten Stellung, so befindet sich der Eingriffsabschnitt 66 in Eingriff mit der Eingriffslasche 74 der Normallenkbetrieb-Lenkkrafteinleitungseinheit 38, so dass die Normallenkbetrieb-Lenkeinrichtung 26 mit dem Lenk-Drehelement 52 und somit dem Radträger 54 in Lenkeingriff steht. Befindet sich der Schieber 60 hingegen in seiner zweiten Stellung, so befindet sich der Eingriffsabschnitt 68 in Eingriff mit der Eingriffslasche 80 der Hundeganglenkbetrieb-Lenkkrafteinleitungseinheit 42, so dass die Hundeganglenkbetrieb-Lenkeinrichtung 28 mit dem Lenk-Drehelement 52 und somit dem Radträger 54 in Lenkeingriff steht. Damit die Eingriffslasche 74 in der zweiten Stellung des Schiebers 60 die freie Verdrehung der Hundeganglenkbetrieb-Lenkkrafteinleitungseinheit 42 nicht behindert, erstreckt sie sich in Höhenrichtung H nicht so weit nach unten wie die Eingriffslasche 80, so dass sie in einer Ausnehmung 82 des Schiebers 60 aufgenommen ist, durch die sie sich frei hindurch bewegen kann.

Ferner ist darauf hinzuweisen, dass die Eingriffsabschnitte 66 und 68 mit Schrägflächen 66a, 68a versehen sind, die in entgegengesetzten Richtungen keilförmig zulaufen, und dass die zugehörigen Begrenzungsflächen 70, 76 jeweils als komplementäre Gegenschrägflächen ausgebildet sind. Und zwar verlaufen die Schrägflächen 66a des Eingriffsabschnitts 66 derart, dass der Eingriffsabschnitt 66 an seiner dem Stellaggregat 62 zugewandten Seite schmaler ist als an seiner vom Stellaggregat 62 abgewandten Seite. Auf diese Weise kann der Eingriffsabschnitt 66 bei der Bewegung des Schiebers 60 aus der zweiten Stellung in die erste Stellung die Lenkkrafteinleitungseinheit 38 leichter mit dieser in Eingriff treten und diese überdies zentrieren. Ferner kann die Lenkkrafteinleitungseinheit 38 hierdurch spielfrei ausgebildet werden. In analoger Weise verlaufen die Schrägflächen 68a des Eingriffsabschnitts 68 derart, dass der Eingriffsabschnitt 68 an seiner vom Stellaggregat 62 abgewandten Seite schmaler ist als an seiner dem Stellaggregat 62 zugewandten Seite. Auf diese Weise kann der Eingriffsabschnitt 68 bei der Bewegung des Schiebers 60 aus der ersten Stellung in die zweite Stellung die Lenkkrafteinleitungseinheit 42 leichter mit dieser in Eingriff treten und diese überdies zentrieren. Ferner kann die Lenkkrafteinleitungseinheit 42 hierdurch spielfrei ausgebildet werden.

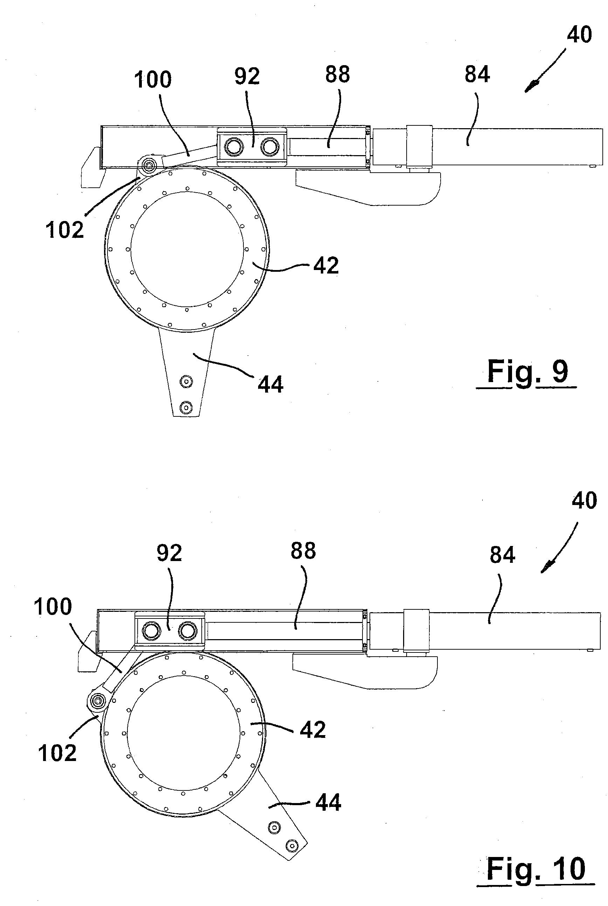

Mit Bezug auf Figur 9 sollen nun noch der Aufbau und die Funktion der Krafterzeugungsvorrichtung 40 erläutert werden, welche die Lenkkraft für den Hundeganglenkbetrieb bereitstellt.

Die Krafterzeugungsvorrichtung 40 umfasst ein Kraftgerät 84, das in dem dargestellten Ausführungsbeispiel ein doppelt wirkendes, hydraulisch betätigbares Zylinder-Kolben-Aggregat ist. Um die Knicklänge des Kraftgeräts 84 zu verkürzen, ist der Zylinder 86 dem Austrittsende der Kolbenstange 88 benachbart bei 90 am (nicht dargestellten) Rahmen des Fahrzeugs 10 befestigt. Das freie Ende der Kolbenstange 88 ist gelenkig mit einem Ende eines Schlittens 92 verbunden, der in einer Führung 94 in Längsrichtung der Führung 94 gleitverlagerbar geführt ist. Die Führung 94 ist bei 96 und 98 am (nicht dargestellten) Rahmen des Fahrzeugs 10 befestigt. An seinem anderen Ende ist der Schlitten 92 gelenkig mit einem Ende einer Koppelstange 100 verbunden, deren anderes Ende mit einer Angriffslasche 102 der Hundeganglenkbetrieb-Lenkkrafteinleitungseinheit 42 (siehe auch Figur 6) verbunden ist.

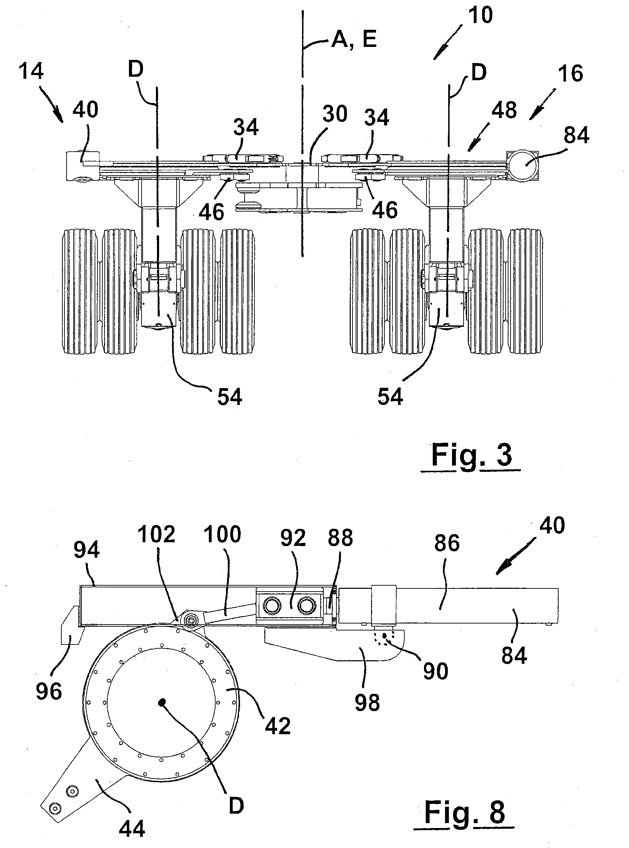

In Figur 8 ist die Kolbenstange 88 nahezu vollständig in den Zylinder 86 eingefahren. Dies entspricht einem Lenkwinkel von 0°, d.h. Geradeausfahrt (siehe auch Figur 11). In Figur 10 ist die Kolbenstange 88 nahezu vollständig aus dem Zylinder 86 ausgefahren. Dies entspricht einem Lenkwinkel von 90°, d.h. Querfahrt (siehe auch Figur 13). Und in Figur 9 befindet sich die Kolbenstange 88 in einer Zwischenstellung, die einem Lenkwinkel von 45° entspricht, d.h. Schrägfahrt (siehe auch Figur 12).

Wie man in den Figuren 8 und 10 anhand der gestrichelt dargestellten Lage der Verbindungsstange 46 erkennt, ist der zur Verfügung stehende Lenkwinkelbereich infolge der mechanischen Weiterleitung der Lenkkraft von Radbaugruppe zu Radbaugruppe durch die Verbindungsstangen 46 begrenzt, da die Verbindungsstangen 46 bei einem größeren Lenkwinkelbereich mit den Radbaugruppen kollidieren würden. Folglich erstreckt sich der Lenkwinkelbereich im Wesentlichen von 0° bis 90°. Auch wenn dies auf den ersten Blick als Einschränkung angesehen werden mag, genügt es doch vollends, um das Fahrzeug 10 in zufriedenstellender Weise auf engem Raum rangieren zu können. Zudem kann der Lenkwinkelbereich durch vollständiges Ein- bzw. Ausfahren der Kolbenstange 88 an seinen beiden Enden um etwa 5° bis 10° erweitert werden, so dass er sich von etwa -10°/-5° bis etwa +95°/100° erstreckt, was das Rangieren weiter erleichtert.

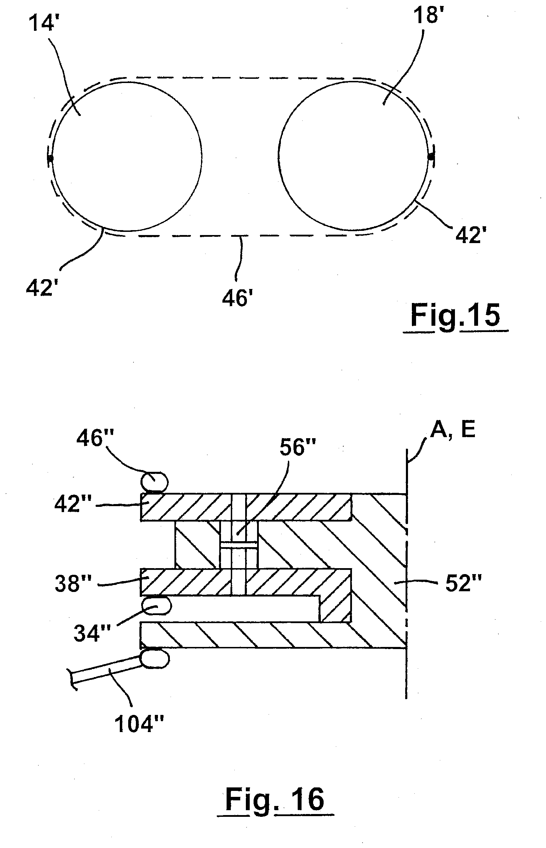

Grundsätzlich ist es auch denkbar, den Lenkwinkelbereich zur Geradeausfahrtrichtung (Lenkwinkel 0°) symmetrisch auszugestalten, so dass er sich beispielsweise von -90° bis +90° erstreckt. Dies kann durch den Einsatz von flexiblen, jedoch längenunveränderlichen Verbindungselementen 46' erreicht werden, beispielsweise Ketten oder Seilen, insbesondere Stahlseilen. Dies ist in Figur 15 grob schematisch und beispielhaft für die Lenkkopplung der beiden Hundeganglenkbetrieb-Lenkkrafteinleitungseinheiten 42' der Radbaugruppen 14' und 18' dargestellt.

Gemäß Vorstehendem besteht der zentrale Gedanke der vorliegenden Erfindung darin, ein Schwerlastfahrzeug bereitzustellen, dessen Lenkanlage 12 neben einer Normallenkbetrieb-Lenkeinrichtung 26, welche die Lenkkraft rein mechanisch über Verbindungsstangen 34 von Achse zu Achse weiterleitet, auch eine Hundeganglenkbetrieb-Lenkeinrichtung 28 umfasst, welche die Lenkkraft ebenfalls rein mechanisch über Verbindungsstangen 46 von Achse zu Achse weiterleitet. Dabei können die einzelnen Radbaugruppen 14, 16, 18, 20, 22, 24 über Kupplungseinrichtungen 56 wahlweise mit der Normallenkbetrieb-Lenkeinrichtung 26 oder der Hundeganglenkbetrieb-Lenkeinrichtung 28 verbunden werden. Dieser zentrale Gedanke braucht aber nicht notwendigerweise so realisiert zu werden, wie dies vorstehend mit Bezug auf die Figuren 1 bis 15 beschrieben worden ist. Im Folgenden sollen daher noch einige weitere Abwandlungsmöglichkeiten beschrieben werden.

Anhand der Ausführungsform gemäß Figur 16 soll verdeutlicht werden, dass das erfindungsgemäße Konstruktionsprinzip auch bei einer Lenkanlage verwirklicht werden kann, wie sie beispielsweise in der DE 10 2012 205 641 beschrieben ist, d.h. einer Lenkanlage, bei der den linken und rechten Radbaugruppen ein und derselben Achse ein gemeinsames Lenk-Drehelement 52" zugeordnet ist. Die Drehachse A dieses Lenk-Drehelements 52" verläuft in der Längsmittelebene E des Fahrzeugs. Gemäß Figur 16 können die Lenkkrafteinleitungseinheit 38" für den Normallenkbetrieb und die Lenkkrafteinleitungseinheit 42" für den Hundeganglenkbetrieb an dem Lenk-Drehelement 52" drehbar gelagert sein. Ferner kann das Lenk-Drehelement 52" mit einer Kupplungseinrichtung 56" ausgestattet sein, die das Lenk-Drehelement 52" wahlweise mit der Lenkkrafteinleitungseinheit 38" für den Normallenkbetrieb und der Lenkkrafteinleitungseinheit 42" für den Hundeganglenkbetrieb verbindet. Auf diese Weise kann eine von der Verbindungsstange 34" für den Normallenkbetrieb oder der Verbindungsstange 46" für den Hundeganglenkbetrieb zugeführte Lenkkraft über die zugeordnete Lenkkrafteinleitungseinheit 38" bzw. 42" in das Lenk-Drehelement 52" und von dort über die Lenkspurstangen 104" an die zugeordnete Radbaugruppe weitergeleitet werden.

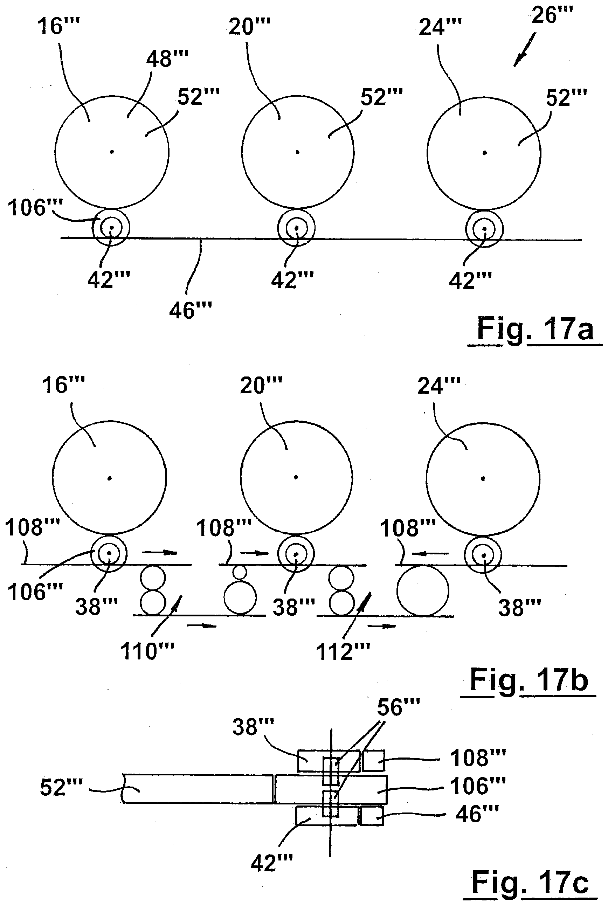

In den Figuren 17a, 17b und 17c ist schließlich eine grob schematische Prinzipstudie einer weiteren Ausführungsform dargestellt, bei der die Normallenkbetrieb-Lenkeinrichtung 26''' (siehe Figur 17b) und die Hundeganglenkbetrieb-Lenkeinrichtung 28''' (siehe Figur 17a) in einer Zahnstangen-Ritzel-Bauweise ausgeführt sind.

Die Hundeganglenkbetrieb-Lenkeinrichtung 28''' umfasst eine durchgehende Zahnstange 46''', welche die drei Radbaugruppen 16''', 20''', 24''' miteinander verbindet. Jeder dieser Radbaugruppen ist ein Ritzel 42''' zugeordnet, die mit der Zahnstange 46''' kämmt und die von dieser abgegriffene Lenkkraft an das Lenk-Drehelement 52''' weiterleitet. Wie in Figur 17c dargestellt ist, kann das Ritzel 42''' über eine Kupplungseinrichtung 56''' mit einem Ritzel 106''' zur gemeinsamen Drehung verbunden werden, das mit einem Zahnkranz des Lenk-Drehelements 52''' kämmt. Weist das Ritzel 106''' einen größeren Durchmesser auf als das Ritzel 42''', so kann eine kleinere Längsverschiebungsbewegung der Zahnstange 46''' in einer größere Drehbewegung des Lenk-Drehelements 52''' übersetzt werden.

Die Normallenkbetrieb-Lenkeinrichtung 26''' unterscheidet sich von der Hundeganglenkbetrieb-Lenkeinrichtung 28''' dadurch, dass anstelle der einen durchgehenden Zahnstange 46''' eine Mehrzahl von Zahnstangen 108''' vorgesehen ist, von denen jede mit einem Ritzel 38''' kämmt, das über eine Kupplungseinrichtung 56''' mit dem mit dem Lenk-Drehelement 52''' kämmenden Ritzel 106''' wahlweise verbunden werden kann. Einander benachbarte Zahnstangen 108''' sind über Getriebebaugruppen 110''' bzw. 112' miteinander verbunden, die gemäß Figur 17b beispielsweise von Zahnstangen-Ritzel-Anordnungen gebildet werden. Durch entsprechende Wahl der Ritzel können diese Zahnstangen-Ritzel-Anordnungen den Lenkdrehsinn von Radbaugruppe zu Radbaugruppe beibehalten (Getriebebaugruppe 110''') oder umkehren (Getriebebaugruppe 112'''). Ferner können sie das Übersetzungsverhältnis (Drehwinkeländerung der Lenk-Drehelement 52''' pro Längeneinheit der Verlagerungsbewegung der Zahnstange 108''') von Radbaugruppe zu Radbaugruppe in einem, beispielsweise durch das Ackermann-Prinzip, vorgegebenen Maße verändern. Da die Kupplungseinrichtung 56''' vor der eigentlichen Radbaugruppe angeordnet ist, können bei diesem Ausführungsbeispiel herkömmliche Einfach-Drehkränze 48''' eingesetzt werden.

## Patentansprüche

1. Schwerlastfahrzeug (10) umfassend
• eine Mehrzahl von Achsen, von denen jede wenigstens eine linke Radbaugruppe (16, 20, 24) und wenigstens eine rechte Radbaugruppe (14, 18, 22) aufweist,
• eine Lenkanlage (12), welche derart ausgebildet ist, dass sie
sowohl einen Normallenkbetrieb ermöglicht, gemäß welchem die linken Radbaugruppen (16, 20, 24) und die rechten Radbaugruppen (14, 18, 22) jeweils einen von der Position der jeweiligen Achse in Längsrichtung (L) des Fahrzeugs (10) abhängenden Lenkwinkel aufweisen, wobei die Radbaugruppen einander benachbarter Achsen einen voneinander verschiedenen Lenkwinkel aufweisen,
als auch einen Hundeganglenkbetrieb ermöglicht, gemäß welchem die der Mehrzahl von Achsen zugeordneten Radbaugruppen (14, 16, 18, 20, 22, 24) alle den gleichen Lenkwinkel aufweisen,
wobei die Lenkanlage (12) für jede Achse umfasst:
• wenigstens ein um eine Drehachse (D) drehbares Lenk-Drehelement (52), welches mit der wenigstens einen linken Radbaugruppe (16, 20, 24) oder/und der wenigstens einen rechten Radbaugruppe (14, 18, 22) der Achse in Lenkverbindung steht,
• für jedes Lenk-Drehelement (52) eine diesem zugeordnete Normallenkbetrieb-Lenkkrafteinleitungseinheit (38),
wobei die Lenkanlage (12) ferner umfasst:
• wenigstens ein Normallenkbetrieb-Verbindungselement (34), welches die Normallenkbetrieb-Lenkkrafteinleitungseinheiten (38) von einander in Längsrichtung (L) des Fahrzeugs (10) benachbarten Achsen miteinander verbindet,
• wenigstens ein am Fahrzeug angeordnetes Kraftgerät (32, 84) welches mit wenigstens einer der Lenkkrafteinleitungseinheiten (38, 42) verbunden ist und die Lenkkraft bereitstellt,
**dadurch gekennzeichnet,**
**dass** die Lenkanlage (12) für jede Achse ferner umfasst:
• für jedes Lenk-Drehelement (52) eine diesem zugeordnete Hundeganglenkbetrieb-Lenkkrafteinleitungseinheit (42),
• für jedes Lenk-Drehelement (52) eine Kupplungseinrichtung (56), welche das Lenk-Drehelement (52) wahlweise mit der Normallenkbetrieb-Lenkkrafteinleitungseinheit (38) oder der Hundeganglenkbetrieb-Lenkkrafteinleitungseinheit (42) drehfest verbindet,
und **dass** die Lenkanlage (12) ferner umfasst:
• wenigstens ein Hundeganglenkbetrieb-Verbindungselement (46), welches die Hundeganglenkbetrieb-Lenkkrafteinleitungseinheit (42) von einander in Längsrichtung (L) des Fahrzeugs (10) benachbarten Achsen miteinander verbindet.

2. Schwerlastfahrzeug nach Anspruch 1,
**dadurch gekennzeichnet, dass** die Normallenkbetrieb-Lenkkrafteinleitungseinheit (38) ein dem jeweiligen Lenk-Drehelement (52) zugeordnetes Normallenkbetrieb-Drehelement umfasst,
dass die Hundeganglenkbetrieb-Lenkkrafteinleitungseinheit (42) ein dem jeweiligen Lenk-Drehelement (52) zugeordnetes Hundeganglenkbetrieb-Drehelement umfasst, und
dass die Kupplungseinrichtung (56) das Lenk-Drehelement (52) wahlweise mit dem Normallenkbetrieb-Drehelement oder dem Hundeganglenkbetrieb-Drehelement drehfest verbindet.

3. Schwerlastfahrzeug nach Anspruch 1 oder 2,
**dadurch gekennzeichnet, dass** den linken Radbaugruppen (16, 20, 24) und den rechten Radbaugruppe (14, 18, 22) einer Achse jeweils ein gesondertes Lenk-Drehelement (52) zugeordnet ist.

4. Schwerlastfahrzeug nach Anspruch 2 oder 3,
**dadurch gekennzeichnet, dass** wenigstens ein Lenk-Drehelement (52) Teil eines Drehgestells (48) ist, welches ferner ein Rahmenelement (50) umfasst, das am Rahmen des Fahrzeugs (10) betriebsfest angeordnet ist, wobei das Lenk-Drehelement (52) an dem Rahmenelement (50) um seine Drehachse (D) verdrehbar gelagert ist,
wobei das Drehgestell (48) ferner das Normallenkbetrieb-Drehelement (38) und das Hundeganglenkbetrieb-Drehelement (42) umfasst, wobei das Normallenkbetrieb-Drehelement (38) und das Hundeganglenkbetrieb-Drehelement (42) an dem Rahmenelement (50) mittelbar oder unmittelbar um die Drehachse (D) verdrehbar gelagert sind.

5. Schwerlastfahrzeug nach Anspruch einem der Ansprüche 1 bis 4, **dadurch gekennzeichnet, dass** die wenigstens eine Normallenkbetrieb-Lenkkrafteinleitungseinheit (38) einen Normallenkbetrieb-Lenkhebel (36) aufweist, mit welchem das wenigstens eine Normallenkbetrieb-Verbindungselement (34) verbunden ist, oder/und dass die wenigstens eine Hundeganglenkbetrieb-Lenkkrafteinleitungseinheit (42) einen Hundeganglenkbetrieb-Lenkhebel (44) aufweist, mit welchem das wenigstens eine Hundeganglenkbetrieb-Verbindungselement (46) verbunden ist.

6. Schwerlastfahrzeug nach Anspruch 5,
**dadurch gekennzeichnet, dass** der Normallenkbetrieb-Lenkhebel (36) und der Hundeganglenkbetrieb-Lenkhebel (44) bei Geradeausfahrt auf der zur Fahrzeuglängsmitte hin weisenden Seite des Lenk-Drehelements (52) angeordnet sind.

7. Schwerlastfahrzeug nach einem der Ansprüche 1 bis 6,
**dadurch gekennzeichnet, dass** die Kupplungseinrichtung (56) ein Stellaggregat (62) umfasst, das mit dem Lenk-Drehelement (52) fest verbunden ist, sowie einen Schieber (60), der mittels des Stellaggregats (62) relativ zu dem Lenk-Drehelement (52) zwischen einer ersten Stellung und einer zweiten Stellung verlagerbar ist,
wobei der Schieber (60) einen ersten Eingriffsabschnitt (66) und einen zweiten Eingriffsabschnitt (68) umfasst, wobei der erste Eingriffsabschnitt (66) in der ersten Stellung des Schiebers (60) mit einer der Lenkkrafteinleitungseinheiten, nämlich der Normallenkbetrieb-Lenkkrafteinleitungseinheit (38) oder der Hundeganglenkbetrieb-Lenkkrafteinleitungseinheit, in Lenkkraftübertragungseingriff steht,
während der zweite Eingriffsabschnitt (68) in der zweiten Stellung des Schiebers (60) mit der jeweils anderen der Lenkkrafteinleitungseinheiten, nämlich der Hundeganglenkbetrieb-Lenkkrafteinleitungseinheit (42) oder der Normallenkbetrieb-Lenkkrafteinleitungseinheit, in Lenkkraftübertragungseingriff steht.

8. Schwerlastfahrzeug nach Anspruch 7,
**dadurch gekennzeichnet, dass** der Schieber (60) ferner dem einen (68) der beiden Eingriffsabschnitte benachbart eine Ausnehmung (82) aufweist, die dann, wenn dieser Eingriffsabschnitt (68) mit der zugeordneten Lenkkrafteinleitungseinheit (42) in Lenkkraftübertragungseingriff steht, die freie Bewegung der anderen Lenkkrafteinleitungseinheit (38) ermöglicht.

9. Schwerlastfahrzeug nach Anspruch 7 oder 8,
**dadurch gekennzeichnet, dass** der erste Eingriffsabschnitt (66) und der zweite Eingriffsabschnitt (68) in Höhenrichtung (H) des Fahrzeugs (10) übereinander angeordnet sind.

10. Schwerlastfahrzeug nach einem der Ansprüche 7 bis 9,
**dadurch gekennzeichnet, dass** wenigstens einer der Eingriffsabschnitte (66, 68) mit Schrägflächen (66a, 68a) ausgebildet ist, die mit korrespondierenden Gegenschrägflächen (70, 76) der zugeordneten Lenkkrafteinleitungseinheit (38, 42) zusammenwirken.

11. Schwerlastfahrzeug nach einem der Ansprüche 1 bis 10,
**dadurch gekennzeichnet, dass** für den Normallenkbetrieb und den Hundeganglenkbetrieb jeweils weinigstens ein Kraftgerät (32, 84) zur Erzeugung der erforderlichen Lenkkraft vorgesehen ist.

12. Schwerlastfahrzeug nach Anspruch 11,
**dadurch gekennzeichnet, dass** den linken Radbaugruppen (16, 20, 24) des Fahrzeugs (10) und den rechten Radbaugruppen (14, 18, 22) des Fahrzeugs (10) jeweils ein gesondertes Kraftgerät (84) zur Erzeugung der für den Hundeganglenkbetrieb erforderlichen Lenkkraft zugeordnet ist.

13. Schwerlastfahrzeug nach Anspruch 11 oder 12,
**dadurch gekennzeichnet, dass** das Kraftgerät (84) ein, vorzugsweise hydraulisch betätigbares, Zylinder-Kolben-Aggregat ist.

14. Schwerlastfahrzeug nach Anspruch 13,
**dadurch gekennzeichnet, dass** der Zylinder (86) seinem Kolbenstangen-Austrittsende benachbart am Rahmen des Fahrzeugs (10) gelagert ist, und zwar vorzugsweise relativ zu diesem verschwenkbar gelagert ist.

15. Schwerlastfahrzeug nach Anspruch 13 oder 14,
**dadurch gekennzeichnet, dass** das freie Ende der Kolbenstange (88) mit einem Führungsschlitten (92) verbunden ist, der in einer rahmenfesten Führung (94) verschiebbar geführt ist, wobei der Führungsschlitten (92) vorzugsweise ferner mit einem Ende einer Verbindungsstange (100) verbunden ist, deren anderes Ende mit der Lenkkrafteinleitungseinheit (42) verbunden ist.

## Claims

1. Heavy goods vehicle (10) comprising
• a plurality of axes, each of which comprises at least one left wheel assembly (16, 20, 24) and at least one right wheel assembly (14, 18, 22),
• a steering system (12), which is configured such that it allows
both a normal steering mode, in which the left wheel assemblies (16, 20, 24) and the right wheel assemblies (14, 18, 22) each have a steering angle which is dependent on the position of the relevant axis in the longitudinal direction (L) of the vehicle (10), the wheel assemblies of adjacent axes having a different steering angle from one another,
and a crab steering mode, in which the wheel assemblies (14, 16, 18, 20, 22, 24) assigned to the plurality of axes all have the same steering angle,
the steering system (12) comprising for each axis:
• at least one steering rotary element (52) which is rotatable about an axis of rotation (D) and is in steering connection with the at least one left wheel assembly (16, 20, 24) and/or the at least one right wheel assembly (14, 18, 22) of the axis,
• for each steering rotary element (52), a normal steering mode steering effort introduction unit (38) assigned thereto,
the steering system (12) further comprising:
• at least one normal steering mode connecting element (34), which interconnects the normal steering mode steering effort introduction units (38) of axes that are adjacent to one another in the longitudinal direction (L) of the vehicle (10),
• at least one effort apparatus (32, 84) which is arranged on the vehicle, is connected to at least one of the steering effort introduction units (38, 42) and provides the steering effort
**characterised in that**
the steering system (12) further comprises for each axis:
• for each steering rotary element (52), a crab steering mode steering effort introduction unit (42) assigned thereto,
• for each steering rotary element (52), a coupling device (56) which connects the steering rotary element (52) in a rotationally fixed manner selectively to the normal steering mode steering effort introduction unit (38) or to the crab steering mode steering effort introduction unit (42),
and **in that** the steering system (12) further comprises:
• at least one crab steering mode connecting element (46) which interconnects the crab steering mode steering effort introduction unit (42) of axes that are adjacent to one another in the longitudinal direction (L) of the vehicle (10).

2. Heavy goods vehicle according to claim 1, **characterised in that** the normal steering mode steering effort introduction unit (38) comprises a normal steering mode rotary element assigned to the relevant steering rotary element (52),
**in that** the crab steering mode steering effort introduction unit (42) comprises a crab steering mode rotary element assigned to the relevant steering rotary element (52), and
**in that** the coupling device (56) connects the steering rotary element (52) in a rotationally fixed manner selectively to the normal steering mode rotary element or to the crab steering mode rotary element.

3. Heavy goods vehicle according to either claim 1 or claim 2, **characterised in that** a separate steering rotary element (52) is assigned in each case to the left wheel assemblies (16, 20, 24) and the right wheel assemblies (14, 18, 22) of an axis.

4. Heavy goods vehicle according to either claim 2 or claim 3, **characterised in that** at least one steering rotary element (52) is part of a rotary frame (48) which also comprises a frame element (50) which is arranged in an operationally fixed manner on the frame of the vehicle (10), the steering rotary element (52) being mounted on the frame element (50) so as to be rotatable about its axis of rotation (D),
the rotary frame (48) also comprising the normal steering mode rotary element (38) and the crab steering mode rotary element (42), the normal steering mode rotary element (38) and the crab steering mode rotary element (42) being indirectly or directly mounted on the frame element (50) so as to be rotatable about the axis of rotation (D).

5. Heavy goods vehicle according to any of claims 1 to 4, **characterised in that** the at least one normal steering mode steering effort introduction unit (38) comprises a normal steering mode steering lever (36) to which the at least one normal steering mode connecting element (34) is connected, and/or **in that** the at least one crab steering mode steering effort introduction unit (42) comprises a crab steering mode steering lever (44) to which the at least one crab steering mode connecting element (46) is connected.

6. Heavy goods vehicle according to claim 5, **characterised in that**, when driving in a straight line, the normal steering mode steering lever (36) and the crab steering mode steering lever (44) are arranged on the side of the steering rotary element (52) pointing towards the longitudinal centre of the vehicle.

7. Heavy goods vehicle according to any of claims 1 to 6, **characterised in that** the coupling device (56) comprises an adjusting unit (62), which is fixed to the steering rotary element (52), and a slide (60) which can be moved by means of the adjusting unit (62) relative to the steering rotary element (52) between a first position and a second position,
the slide (60) comprising a first engagement portion (66) and a second engagement portion (68), the first engagement portion (66), in the first position of the slide (60), being in steering effort transmission engagement with one of the steering effort introduction units, namely the normal steering mode steering effort introduction unit (38) or the crab steering mode steering effort introduction unit,
whereas the second engagement portion (68), in the second position of the slide (60), is in steering effort transmission engagement with the respective other steering effort introduction units, namely the crab steering mode steering effort introduction unit (42) or the normal steering mode steering effort introduction unit.

8. Heavy goods vehicle according to claim 7, **characterised in that** the slide (60) also comprises a recess (82) adjacently to one (68) of the two engagement portions, which recess allows the free movement of the other steering effort introduction unit (38) when said engagement portion (68) is in steering effort transmission engagement with the associated steering effort introduction unit (42).

9. Heavy goods vehicle according to either claim 7 or claim 8, **characterised in that** the first engagement portion (66) and the second engagement portion (68) are arranged above one another in the vertical direction (H) of the vehicle (10).

10. Heavy goods vehicle according to any of claims 7 to 9, **characterised in that** at least one of the engagement portions (66, 68) has oblique faces (66a, 68a) which cooperate with corresponding counter oblique faces (70, 76) of the assigned steering effort introduction unit (38, 42).

11. Heavy goods vehicle according to any of claims 1 to 10, **characterised in that** at least one effort apparatus (32, 84) for generating the required steering effort is provided in each case for the normal steering mode and the crab steering mode.

12. Heavy goods vehicle according to claim 11, **characterised in that** a separate effort apparatus (84) for generating the steering effort required for the crab steering mode is assigned, in each case, to the left wheel assemblies (16, 20, 24) of the vehicle (10) and the right wheel assemblies (14, 18, 22) of the vehicle (10).

13. Heavy goods vehicle according to either claim 11 or claim 12, **characterised in that** the effort apparatus (84) is a, preferably hydraulically actuatable, cylinder piston unit.

14. Heavy goods vehicle according to claim 13, **characterised in that** the cylinder (86) is mounted on the frame of the vehicle (10) adjacently to the piston rod outlet end of said cylinder, and preferably so as to be pivotable relative to said frame.

15. Heavy goods vehicle according to either claim 13 or claim 14, **characterised in that** the free end of the piston rod (88) is connected to a guide block (92) which is movably guided in a guide (94) secured to the frame, the guide block (92) preferably also being connected to one end of a connecting rod (100), the other end of which is connected to the steering effort introduction unit (42).

## Revendications

1. Poids lourd (10) comprenant
- une pluralité d'essieux, dont chacun présente au moins un ensemble de roues (16, 20, 24) gauche et au moins un ensemble de roues (14, 18, 22) droit,
- une installation de direction (12) qui est réalisée de telle manière que non seulement elle permet un fonctionnement de direction normale, selon lequel les ensembles de roues (16, 20, 24) gauches et les ensembles de roues (14, 18, 22) droits présentent respectivement un angle de direction dépendant de la position de l'essieu respectif dans le sens longitudinal (L) du véhicule (10), dans lequel les ensembles de roues d'essieux contigus l'un à l'autre présentent un angle de direction différent l'un de l'autre,
mais elle permet aussi un fonctionnement de direction de marche en crabe, selon lequel les ensembles de roues (14, 16, 18, 20, 22, 24) associés à la pluralité d'essieux présentent tous le même angle de direction,
dans lequel l'installation de direction (12) pour chaque essieu comprend :
- au moins un élément de rotation de direction (52) rotatif autour d'un axe de rotation (D) qui est en liaison de direction avec l'au moins un ensemble de roues gauche (16, 20, 24) et/ou l'au moins un ensemble de roues (14, 18, 22) droit de l'essieu,
- pour chaque élément de rotation de direction (52) une unité d'introduction de force de direction de fonctionnement de direction normale (38) associée à celui-ci,
dans lequel l'installation de direction (12) comprend de plus :
- au moins un élément de liaison de fonctionnement de direction normale (34) qui relie entre elles les unités d'introduction de force de direction de fonctionnement de direction normale (38) d'essieux contigus l'un à l'autre dans le sens longitudinal (L) du véhicule (10),
- au moins un appareil de force (32, 84) agencé sur le véhicule qui est raccordé à au moins une des unités d'introduction de force de direction (38, 42) et met à disposition la force de direction,
**caractérisé en ce que**
l'installation de direction (12) pour chaque essieu comprend de plus :
- pour chaque élément de rotation de direction (52) une unité d'introduction de force de direction de fonctionnement de direction de marche en crabe (42) associée à celui-ci,
- pour chaque élément de rotation de direction (52) un dispositif de couplage (56) qui relie l'élément de rotation de direction (52) au choix à l'unité d'introduction de force de direction de fonctionnement de direction normale (38) ou à l'unité d'introduction de force de direction de fonctionnement de direction de marche en crabe (42) de manière à résister à la rotation,
et **en ce que** l'installation de direction (12) comprend de plus :
- au moins un élément de liaison de fonctionnement de direction de marche en crabe (46) qui relie entre elles l'unité d'introduction de force de direction de fonctionnement de marche en crabe (42) d'essieux contigus l'un à l'autre dans le sens longitudinal (L) du véhicule (10).

2. Poids lourd selon la revendication 1,
**caractérisé en ce que** l'unité d'introduction de force de direction de fonctionnement de direction normale (38) comprend un élément de rotation de fonctionnement de direction normale associé à l'élément de rotation de direction (52) respectif,
**en ce que** l'unité d'introduction de force de direction de fonctionnement de direction de marche en crabe (42) comprend un élément de rotation de fonctionnement de direction de marche en crabe associé à l'élément de rotation de direction (52) respectif, et
**en ce que** le dispositif de couplage (56) relie l'élément de rotation de direction (52) au choix à l'élément de rotation de fonctionnement de direction normale ou à l'élément de rotation de fonctionnement de direction de marche en crabe de manière à résister à la rotation.

3. Poids lourd selon la revendication 1 ou 2,
**caractérisé en ce que** respectivement un élément de rotation de direction (52) séparé est associé aux ensembles de roues (16, 20, 24) gauches et aux ensembles de roues (14, 18, 22) droits d'un essieu.

4. Poids lourd selon la revendication 2 ou 3,
**caractérisé en ce qu'**au moins un élément de rotation de direction (52) fait partie d'un bâti de rotation (48) qui comprend de plus un élément de cadre (50) qui est agencé de manière à résister aux contraintes de fonctionnement sur le cadre du véhicule (10), dans lequel l'élément de rotation de direction (52) est logé de manière rotative sur l'élément de cadre (50) autour de son axe de rotation (D),
dans lequel le bâti de rotation (48) comprend de plus l'élément de rotation de fonctionnement de direction normale (38) et l'élément de rotation de fonctionnement de direction de marche en crabe (42), dans lequel l'élément de rotation de fonctionnement de direction normale (38) et l'élément de rotation de fonctionnement de direction de marche en crabe (42) sont logés de manière rotative sur l'élément de cadre (50) directement ou indirectement autour de l'axe de rotation (D).

5. Poids lourd selon l'une des revendications 1 à 4,
**caractérisé en ce que** l'au moins une unité d'introduction de force de direction de fonctionnement de direction normale (38) présente un levier de direction de fonctionnement de direction normale (36) à lequel l'au moins un élément de liaison de fonctionnement de direction normale (34) est raccordé, et/ou **en ce que** l'au moins une unité d'introduction de force de direction de fonctionnement de direction de marche en crabe (42) présente un levier de direction de fonctionnement de direction de marche en crabe (44) à lequel l'au moins un élément de liaison de fonctionnement de direction de marche en crabe (46) est raccordé.

6. Poids lourd selon la revendication 5,
**caractérisé en ce que** le levier de direction de fonctionnement de direction normale (36) et le levier de direction de fonctionnement de direction de marche en crabe (44) sont agencés en cas de déplacement en ligne droite sur le côté tourné vers le milieu longitudinal de véhicule de l'élément de rotation de direction (52).

7. Poids lourd selon l'une des revendications 1 à 6,
**caractérisé en ce que** le dispositif de couplage (56) comprend un groupe de réglage (62) qui est raccordé de manière fixe à l'élément de rotation de direction (52), ainsi qu'un coulisseau (60) qui est déplaçable à l'aide du groupe de réglage (62) par rapport à l'élément de rotation de direction (52) entre une première position et une seconde position,
dans lequel le coulisseau (60) comprend une première section de prise (66) et une seconde section de prise (68), dans lequel la première section de prise (66) est en prise de transmission de force de direction dans la première position du coulisseau (60) avec une des unités d'introduction de force de direction, à savoir l'unité d'introduction de force de direction de fonctionnement de direction normale (38) ou l'unité d'introduction de force de direction de fonctionnement de direction de marche en crabe,
alors que la seconde section de prise (68) est en prise de transmission de force de direction dans la seconde position du coulisseau (60) avec l'autre respective des unités d'introduction de force de direction, à savoir l'unité d'introduction de force de direction de fonctionnement de direction de marche en crabe (42) ou l'unité d'introduction de force de direction de fonctionnement de direction normale.

8. Poids lourd selon la revendication 7,
**caractérisé en ce que** le coulisseau (60) présente de plus un évidement (82) contigu à l'une (68) des deux sections de prise, qui, lorsque cette section de prise (68) est en prise de transmission de force de direction avec l'unité d'introduction de force de direction (42) associée, permet le mouvement libre de l'autre unité d'introduction de force de direction (38).

9. Poids lourd selon la revendication 7 ou 8,
**caractérisé en ce que** la première section de prise (66) et la seconde section de prise (68) sont agencées l'une au-dessus de l'autre dans le sens vertical (H) du véhicule (10).

10. Poids lourd selon l'une des revendications 7 à 9,
**caractérisé en ce qu'**au moins une des sections de prise (66, 68) est réalisée avec des surfaces obliques (66a, 68a) qui coagissent avec des surfaces obliques antagonistes (70, 76) correspondantes de l'unité d'introduction de force de direction (38, 42) associée.

11. Poids lourd selon l'une des revendications 1 à 10,
**caractérisé en ce que** pour le fonctionnement de direction normale et le fonctionnement de direction de marche en crabe respectivement au moins un appareil de force (32, 84) est prévu pour la génération de la force de direction nécessaire.

12. Poids lourd selon la revendication 11,
**caractérisé en ce que** respectivement un appareil de force (84) séparé est associé pour la génération de la force de direction nécessaire au fonctionnement de direction de marche en crabe aux ensembles de roues (16, 20, 24) gauches du véhicule (10) et aux ensembles de roues (14, 18, 22) droits du véhicule (10).

13. Poids lourd selon la revendication 11 ou 12,
**caractérisé en ce que** l'appareil de force (84) est un groupe à piston et cylindre actionnable de préférence par voie hydraulique.

14. Poids lourd selon la revendication 13,
**caractérisé en ce que** le cylindre (86) est logé de manière contiguë à son extrémité de sortie de tige de piston sur le cadre du véhicule (10), et ce de préférence est logé de manière pivotante par rapport à celui-ci.

15. Poids lourd selon la revendication 13 ou 14,
**caractérisé en ce que** l'extrémité libre de la tige de piston (88) est raccordée à un chariot de guidage (92) qui est guidé de manière mobile dans un guidage (94) fixé au cadre, dans lequel le chariot de guidage (92) est de préférence raccordé de plus à une extrémité d'une tige de liaison (100), dont l'autre extrémité est raccordée à l'unité d'introduction de force de direction (42).
